# EUROPÄISCHE PATENTANMELDUNG

(11) **EP 1 122 716 A2**
(43) Veröffentlichungstag der Anmeldung: **08.08.2001**
(21) Anmeldenummer: 00126927.3
(22) Anmeldetag: 08.12.2000
(51) Int. Cl.: G10L 13/08

(54) **Vorrichtung zur Umwandlung von gedruckten Texten in Sprache**

(30) Priorität: 29.01.2000 DE 10003898
(71) Anmelder: Deutsche Telekom AG, 53113 Bonn (DE)
(72) Erfinder: Burzywoda, Günter, 56745 Volkesfeld (DE)

(57) **Zusammenfassung**

Es wird eine Vorrichtung in Form eines handelsüblichen mobilen Telekommunikatinsendgerätes (1) beschrieben, wie zum Beispiel Handy, Pager u.s.w., in das ein Scanner bzw. Abtaster (2) integriert ist. Der Scanner bzw. Abtaster (2) verfügt über eine Software, die die Umwandlung von Text in elektronische Daten ermöglicht und die Umwandlung von Text in Sprache. Textstellen (8) aus zum Beispiel einer Druckschrift oder einem Foto (7) werden dadurch erfaßt, daß der Scanner bzw. Abtaster (2) über die Tastatur oder eine Sprachsteuerung des mobilen Telekommunikationsendgerätes (1) aktiviert und über die ausgewählten Textstellen geführt wird. Dabei erfaßt eine im Scanner bzw. Abtaster (2) vorhandene Schrifterkennungssoftware den Text und wandelt ihn in elektronische Information bzw. Datensignale um. Diese werden in einem Speicher des mobilen Telekommunikationsendgerätes (1) abgespeichert und dann entweder mit Hilfe von Fest- oder Mobilfunkübertragung (12) an Personalcomputer oder Textverarbeitungsgeräte bzw. Multimediageräte (13) wählbar geleitet und/oder über eine in das mobile Telekommunikationsendgerät (1) integrierte Infrarotschnittstelle (3) sowie eine Infrarotverbindung (19) über eine Infrarotschnittstelle (10), zum Beispiel eines TV-Gerätes (11), gegeben. Dort kann die Ausgabe mittels Sprache und/oder Anzeige und auch eine Weiterverarbeitung erfolgen. Außerdem verfügt das mobile Telekommunikationsendgerät (1) über eine Übersetzungssoftware, die die über den Scanner eingelesenen Texte erfaßt und in eine wählbare Sprache übersetzt.

## Beschreibung

Die Erfindung betrifft eine Vorrichtung zur Umwandlung von gedruckten Texten in Sprache mit Hilfe von Scannern nach dem Oberbegriff des Patentanspruchs 1.

Verfahren und Vorrichtungen zum Diktieren, Senden, Empfangen und Bearbeiten von Textdokumenten mittels einer Telekommunikationseinrichtung sowie sprachgesteuerte Computer sind grundsätzlich bekannt.

So ist zum Beispiel in der DE 197 55 264 A1 ein mobiles, vom Benutzer sprach- und/oder bewegungsgesteuertes, tragbares Rechnersystem bekannt, das mindestens aus einer an einem Helm montierten Anzeigeeinheit besteht, die über ein Glasfaserkabel mit einem Verarbeitungsrechner und/oder mit anderen Aktivierungs- und Signalgeberkomponenten verbunden ist. Eine direkte Bearbeitung von Textdokumenten und eine Umwandlung des Textes in Sprache kann mit dieser Vorrichtung jedoch nicht erfolgen.

In der DE 43 31 710 A1 sind ein Verfahren und eine Vorrichtung zum Diktieren, Senden, Empfangen und Kommentieren eines Textdokumentes mittels einer Telekommunikationseinrichtung beschrieben. Das Textdokument wird mittels Sprache erstellt, das heißt von einem Spracherkenner in Textdaten umgewandelt. Die Textdaten können mittels Sprache korrigiert, editiert und kommentiert werden und das Versenden erfolgt über eine Telekommunikationseinrichtung automatisch. Außerdem wird in dieser Druckschrift ein Verfahren zum Empfangen und Kommentieren eines Multimediadokuments mittels einer Telekommunikationseinrichtung beschrieben, bei dem Textdaten des Multimediadokumentes angesehen werden können, und/oder bei dem Textdaten des Multimediadokumentes ausgedruckt werden können, und/oder bei dem Textdaten in Sprache umgewandelt werden können, und/oder bei dem ein Kommentar zu dem Textdokument hinzugefügt werden kann, und das Textdokument mit dem Kommentar weiterverarbeitet bzw. -verwendet werden kann.

Eine weitere Vorrichtung zum Diktieren und Senden eines Dokuments mittels einer Telekommunikationseinrichtung nach der DE 43 31 710 A1 besteht aus einer Vorrichtung zum Diktieren, einer Vorrichtung zum Übermitteln von gesprochener Sprache zu einem Spracherkenner, einem Spracherkenner zum Umwandeln von Sprache in Textdaten, Software zum Korrigieren von Textdaten mittels Sprache, Software zum Editieren von Textdaten, und einer Einrichtung zum Senden der Textdaten zu einem weitern Teilnehmer.

Sowohl mit dem hier beschriebenen Verfahren als auch mit der Vorrichtung ist es nicht möglich, Textdaten eines Textdokumentes in Sprache an Ort und Stelle in Sprache auszugeben. In diesem Dokument wird lediglich ein Beispiel angegeben, bei dem ein Textdokument gesendet wird, und der weitere Teilnehmer über kein Facsimile verfügt. In diesem Fall kann, falls ein Zugriff auf den Spracherkenner existiert, aus den Textdaten mittels der Text-To-Speech-Funktion wieder Sprache geformt werden, die dann über das Telefon ausgegeben wird.

Außerdem ist aus der DE 39 10 467 A1 ein Verfahren und eine Vorrichtung zur Erzeugung von Berichten bekanntgeworden. Hierbei werden die Sprachsignale einschließlich vorgegebener Trigger-Ausdrücke, von zum Beispiel einem Mehrfachleitung-Telefon, an ein Spracherkennungssystem übertragen. Das Spracherkennungssystem ordnet die Triggerausdrücke vor gegebenen Blöcken von Textmitteilungen zu und erzeugt einen Bericht. Der Text wird dann an eine Sprachsynthese-Vorrichtung zur Erzeugung synthetischer Sprachsignale abgegeben, die dann an ein Sprachspeicher- und Weiterleitungssystem zur späteren Wiedergewinnung ausgegeben werden.

Auch hier ist nicht die Möglichkeit gegeben, einen gedruckten Text unmittelbar in Sprache wiederzugeben und gegebenenfalls gleichzeitig noch an eine entfernte Person zu übertragen.

In der DE 41 01 200 A1 ist ein Kommunikationssystem beschrieben, mit dem in ein Sende- und Empfangsgerät diktierte Sprache in synthetische Sprache umgesetzt und/oder in Texte umgesetzt wird. Die Sprache und/oder die Texte werden dann an den Empfänger von einer Zentrale weitergeliefert. Hierbei sind zum Weiterliefern insbesondere ISDN/Telefax, ISDN/Telex und Briefpost erläutert. Auch dieses System ermöglicht nicht die unmittelbare Ausgabe in Sprache eines gedruckten Textes über zum Beispiel einen Handapparat.

Der Erfindung liegt deshalb die Aufgabe zugrunde, eine Vorrichtung zur Umwandlung von gedrucktem Text in Sprache zu schaffen, die die unmittelbare Ausgabe in Form von Sprache über einen Handapparat eines Telefons oder Handys, ein digitales Radio, einen TV-Apparat oder einen Personalcomputer oder ähnliche Apparate und auch die Weiterleitung an entferntstehende Endgeräte eines Telekommunikationssystems ermöglicht.

Die Lösung der Aufgabe ist im Kennzeichen des Patentanspruchs 1 charakterisiert.

Weitere Lösungen bzw. Ausgestaltungen der Erfindung sind in den Kennzeichen der Patentansprüche 2 bis 9 charakterisiert.

Durch die erfindungsgemäße Vorrichtung ist es jetzt möglich, zum Beispiel Textpassagen auf Dokumenten zu erfassen, indem ein integrierter Scanner in einem mobilen Telekommunikationsendgerät über eine Tastatur oder per Sprachsteuerung aktiviert wird und über ausgewählte Textstellen geführt wird. Dabei erfaßt eine Schrifterkennungssoftware den Text und wandelt ihn in elektronische Information um. Diese werden in einem Speicher, der ebenfalls im mobilen Telekommunikationsendgerät integriert ist, abgespeichert. Die gespeicherten Daten können dann entweder über Mobilfunknetze an einen Rechner und/oder andere mobile Telekommunikationsendgeräte weitergegeben werden oder direkt über eine Infrarotschnittstelle in ein immobiles Ausgabegerät mit Lautsprecher und Bildschirm, wie zum Beispiel einem PC, einem Fernsehgerät oder einem digitalen Radiogerät mit Display. Dort stehen die abgespeicherten Daten dann sowohl zum Lesen als auch zum Hören und/oder zur elektronischen Weiterverarbeitung zur Verfügung. Der vom Scanner erfaßte Text, umgewandelt in Sprache über ein mit dem Scanner ausgerüstetes mobiles Telekommunikationsendgerät, wie ein Handy oder ein Telefonhandapparat, ist insbesondere für Blinde oder Sehbehinderte oder auch für sprachbehinderte Menschen sehr hilfreich.

Darüberhinaus verfügt ein solches ausgerüstetes mobiles Telekommunikationsendgerät auch über eine Diktiergerätefunktion, das heißt die Software dieses Gerätes kann Sprache in elektronische Daten umwandeln, die dann als Text elektronisch weiterverarbeitet und/oder ausgegeben werden können. Die Ausgabe kann dabei wiederum direkt über das Display des mobilen Telekommunikationsendgerätes und/oder über jedes andere Ausgabegerät, wie zum Beispiel ein Fernsehgerät, ein PC, oder ein digitales Radio mit Display erfolgen. Die gesamte Vorrichtung bzw. das gesamte System verfügt darüberhinaus über eine Übersetzungssoftware. Diese kann einmal die über den Scanner eingelesenen Texte erfassen und in die gewünschte Sprache übersetzen und zum anderen die aufgesprochenen Informationen direkt übersetzen und als Text und/oder Sprache in der jeweils gewünschten Fremdsprache ausgeben.

Die Übersetzungsfunktion ist für den internationalen Einsatz sowohl im privaten als auch insbesondere im geschäftlichen Bereich sehr hilfreich und ist weltweit einsetzbar.

Weitere Vorteile, Merkmale und Anwendungsmöglichkeiten der vorliegenden Vorrichtung zur Umwandlung von gedruckten Texten unmittelbar in Sprache durch die Integration eines Scanners in ein mobiles Telekommunikationsendgerät mit Text-in-Sprache-Umwandler ergeben sich aus der nachfolgenden Beschreibung in Verbindung mit dem in der Zeichnung dargestellten Ausführungsbeispiel.

Die Erfindung wird im folgenden anhand des in der Zeichnung dargestellten Ausführungsbeispiels näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeutet:

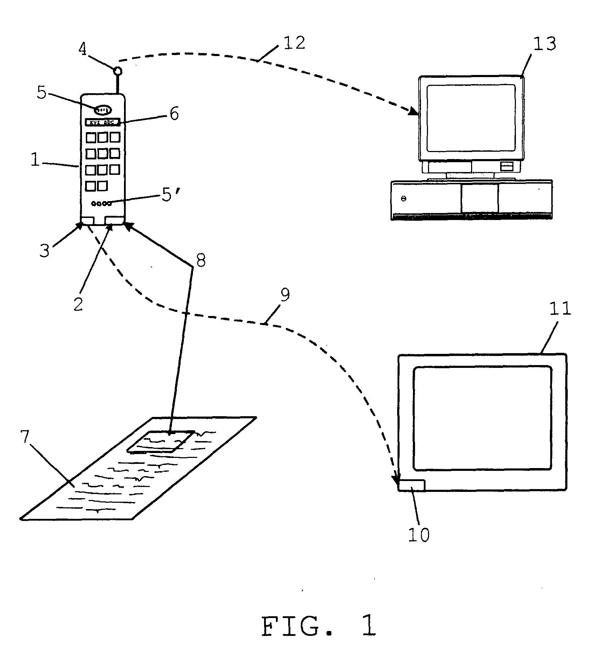

- Fig. 1: ein mobiles Telekommunikationsendgerät mit integriertem Scanner und Text-zu-Sprache-Umwandlungssoftware in Verbindung mit einem Personalcomputer und einem Fernsehgerät.

In Fig. 1 ist ein mobiles Telekommunikationsendgerät 1 gezeigt, das beispielsweise ein Mobiltelefon oder ein Handapparat eines Telefons sein kann, und mit einem Scanner bzw. Abtaster 2 ausgerüstet ist. Außerdem ist das mobile Telekommunikationsendgerät 1 mit einer Infrarotschnittstelle 3 ausgerüstet. Es besitzt weiterhin einen Lautsprecher 5, ein Display 6 und ein Mikrofon 5' sowie eine Antenne 4. Der Scanner bzw. Abtaster 2 verfügt über eine Software, die die Umwandlung von Text in elektronische Daten ermöglicht und die Umwandlung von Texten in Sprache. Um Texte oder Textstellen 8, zum Beispiel aus Druckschriften oder Fotos 7, zu erfassen, wird der Scanner bzw. Abtaster 2 über die Tastatur oder die integrierte Sprachsteuerung des mobilen Telekommunikationsendgerätes 1 aktiviert und über die ausgewählten Textstellen zum Abtasten geführt. Der abgetastete Text wird dabei mit Hilfe einer Schrifterkennungssoftware in entsprechende elektronische Signale bzw. Informationen umgewandelt. Diese werden in einem nicht dargestellten Speicher des mobilen Telekommunikationsendgerätes 1 abgespeichert. Die gespeicherten Informationen können dann entweder direkt über den Lautsprecher 5 oder über eine Mobilfunknetz- oder Festnetz-Verbindung 12 an einen Personalcomputer, ein Textverarbeitungs-, oder Multimediagerät 13 und/oder an andere mobile Telekommunikationsendgeräte weitergegeben bzw. übertragen werden. Eine weitere Möglichkeit besteht darin, im Nahbereich mit Hilfe einer Infrarotverbindung 9 und mit entsprechenden Infrarotschnittstellen 10 ausgerüsteten Fernseh- oder TV-Gerät 11 oder ein digitales Radio mit oder ohne Display, das heißt mit anderen Worten an ein immobiles Ausgabegerät übertragen werden. Die Informationen stehen dann dort zum Lesen und/oder zur elektronischen Weiterverarbeitung mit handelsüblicher Office-Software zur Verfügung.

Der vom Scanner 2 des mobilen Telekommunikationsendgerätes 1 erfaßte und gegebenenfalls zwischengespeicherte Text wird von der Software in Sprachinformation umgewandelt und als Sprache auch über das mobile Telekommunikationsendgerät 1 direkt ausgegeben. Diese Funktion ist insbesondere für Blinde oder Sehbehinderte oder sprachbehinderte Menschen sehr hilfreich. Es kann aber auch auf dem Display 6 des mobilen Telekommunikationsendgerätes 1 die Information angezeigt werden und über den Lautsprecher 5 die Ausgabe in Sprache erfolgen. Über die Antenne 4 eines Mobiltelefons oder eines Handapparates eines Telefons ist eine Fest- oder Mobilnetzübertragung/Verbindung 12 zu einem PC, Textverarbeitungs-, oder Multimediagerät 13 möglich, um zum Beispiel die Daten in Sprache, über Lautsprecher, als Text über Display an jedes Telekommunikationsendgerät auszugeben. Hier kann auch die elektronische Weiterverarbeitung der Textdaten bzw. -informationen erfolgen.

Darüberhinaus verfügt das mobile Telekommunikationsendgerät 1 über eine Diktierfunktion, das heißt die Software des Gerätes kann Sprache über das Mikrofon 5' in elektronische Daten umwandeln, die dann als Text elektronisch weiterverarbeitet und/oder je nach Erfordernis ausgegeben werden können.

Wie bereits erwähnt, kann das gesamte System über eine Übersetzungssoftware verfügen, sodaß die über den Scanner 2 eingelesenen Texte erfaßt und in die gewünschte Sprache übersetzt werden können oder es können auch die aufgesprochenen Informationen direkt übersetzt werden und als Text und/oder Sprache in der jeweils gewünschten Fremdsprache, wie bereits oben beschrieben, ausgegeben werden.

### Liste der Bezugszeichen

- 1: mobiles Telekommunikationsendgerät
- 2: Scanner bzw. Abtaster
- 3: Infrarotschnittstelle
- 4: Antenne
- 5: Lautsprecher
- 5': Mikrofon
- 6: Display
- 7: Druckschrift oder Foto
- 8: Textstelle
- 9: Infrarotverbindung
- 10: Infrarotschnittstelle
- 11: Fernseh- oder TV-Gerät
- 12: Fest- oder Mobilnetz-Übertragung/Verbindung
- 13: PC oder Textverarbeitungs-, Multimediagerät

## Patentansprüche

1. Vorrichtung zum Erstellen, Bearbeiten und Umwandeln von Textdokumenten oder Textstellen in Sprache, dadurch gekennzeichnet,
daß es als mobiles Telekommunikationsendgerät (1), wie Mobiltelefon oder Handapparat eines Telefons, mit einem integrierten Scanner bzw. Abtaster (2) ausgerüstet ist und
daß dem Scanner bzw. Abtaster (2) eine Schaltung mit abgespeicherter Software zur Umwandlung von Text in elektronische Daten und Signale und von Text in eine oder mehrere Sprache(n) zugeordnet ist.

2. Vorrichtung nach Patentanspruch 1, dadurch gekennzeichnet,
daß zur Übertragung und Ausgabe von umgewandelten Textstellen (8) im Nahbereich eine Infrarotschnittstelle (3) im mobilen Telekommunikationsendgerät (1) integriert ist, die über eine Infrarotverbindung (9) und entsprechende Infrarotschnittstellen (10) von Fernseh-Geräten (11) oder Multimediageräten in Verbindung steht.

3. Vorrichtung nach einem oder beiden der Patentansprüche 1 und 2, dadurch gekennzeichnet,
daß das Telekommunikationsendgerät (1) mit einer Antenne (4) ausgerüstet ist, die zur Fest- oder Mobilnetz-Übertragung/-Verbindung (12) mit entferntstehenden Telekommunikationsendgeräten, wie Personalcomputer oder Textverarbeitungs- bzw. Multimediageräte (13), in Verbindung steht.

4. Vorrichtung nach einem der Patentansprüche 1 bis 3, dadurch gekennzeichnet,
daß die Ausgabe der abgetasteten Textstellen (8) einer Druckschrift oder eines Fotos (7) auf dem Lautsprecher (5) als Sprache und/oder visuell auf dem Display (6) des mobilen Telekommunikationsendgerätes (1) erfolgt und
daß die Auswahl der gewünschten Funktion bzw. Funktionen über die Tastatur des mobilen Telekommunikationsendgerätes (1) erfolgt.

5. Vorrichtung nach einem der Patentansprüche 1 bis 4, dadurch gekennzeichnet,
daß der Scanner bzw. Abtaster (2) des mobilen Telekommunikationsendgerätes (1) zur Erfassung von Textstellen (8) einer Druckschrift oder eines Fotos (7) über die Tastatur des mobilen Telekommunikationsendgerätes (1) oder über eine integrierte Sprachsteuerung tastenfrei initialisierbar ist.

6. Vorrichtung nach einem der Patentansprüche 1 bis 5, dadurch gekennzeichnet,
daß über die Infrarotschnittstelle (3) des mobilen Telekommunikationsendgerätes (1) direkt ein oder mehrere immobile Ausgabegeräte mit Infrarotschnittstelle (10) zur Sprach- und/oder Textausgabe mit Weiterverarbeitungsfunktionen verbunden ist/sind.

7. Vorrichtung nach einem der Patentansprüche 1 bis 6, dadurch gekennzeichnet,
daß im mobilen Telekommunikationsendgerät (1) eine softwaregesteuerte Diktiergerätefunktion integriert ist, die Sprache in elektronische Signale bzw. entsprechende Daten umwandelt, die elektronisch weiterverarbeitbar und/oder ausgebbar sind.

8. Vorrichtung nach einem der Patentansprüche 1 bis 7, dadurch gekennzeichnet,
daß im mobilen Telekommunikationsendgerät (1) eine Software zur Übersetzung des über den Scanner (2) abgetasteten Textes in eine gewünschte andere Sprache integriert ist und
daß die übersetzte Textstelle (8) als Text und/oder als Sprache direkt am mobilen Telekommunikationsendgerät (1) wählbar ausgebbar ist.

9. Vorrichtung nach Patentanspruch 8, dadurch gekennzeichnet,
daß in das mobile Telekommunikationsendgerät (1) gesprochene Informationen softwaregesteuert direkt übersetzt werden und als Text und/oder Sprache über das mobile Telekommunikationsendgerät (1) oder über andere Telekommunikationsendgeräte im Nahbereich und/oder über Telekommunikationsendgeräte ausgebbar sind, die mit Fest- oder Mobilnetzen verbunden sind.
